# NEUE EUROPÄISCHE PATENTSCHRIFT

(11) **EP 0 338 112 B2**
(45) Veröffentlichungstag und Bekanntmachung des Hinweises auf die Entscheidung über den Einspruch: **06.10.1993**
(45) Hinweis auf die Patenterteilung: 28.08.1991
(21) Anmeldenummer: 88106487.7
(22) Anmeldetag: 22.04.1988
(51) Int. Cl.: G01M 17/02, B65G 39/073

(54) **Verfahren und Vorrichtung zur Führung und zum Antrieb eines von Kräften beaufschlagten Bandantriebs**
Procedure and device for guiding and driving a belt drive loaded by forces
Procédé et dispositif pour le guidage et l'entraînement d'un entraînement de bande chargé par des forces

(43) Veröffentlichungstag der Anmeldung: 25.10.1989
(73) Patentinhaber: CARL SCHENCK AG, D-64273 Darmstadt (DE)
(72) Erfinder: Storck, Karlheinz, Dr., D-6109 Mühltal 2 (DE)
(74) Vertreter: Dallhammer, Herbert, Dipl.-Ing.

(56) Entgegenhaltungen:
- DE-A- 3 007 362
- DE-C- 613 827
- GB-A- 2 161 243
- US-A- 2 628 709
- US-A- 3 545 582
- US-A- 4 622 848
- SOVIET INVENTIONS ILLUSTRATED Sektion Mechanik,Woche 8508, abstrakt nr. 049187, 3. april 1985; & SU - A - 1 104 078 (KUZNIUI COAL) 23.07.1984
- Prospekt "Bredal Distributeur pour l'Engrais et la Chaux" - 4 Seiten

## Beschreibung

Die Erfindung betrifft ein Verfahren zur Führung und zum Antrieb eines auf seiner Tragseite von Kräften beaufschlagbaren und auf seiner Antriebsseite flüssigkeitsbenetzten unterstützten und um Antriebsmittel und Umlenkmittel geschlungenen Antriebsbandes sowie Vorrichtungen mit um Antriebsmittel und Umlenkmittel geschlungenem Antriebsband.

Derartige Bandantriebe werden bei Reifentestmaschinen (DE-OS 3105163) oder insbesondere bei Fahrzeugprüfständen (DE-OS 3040355), die als sogenannte Flachbahnprüfstände ausgebildet sind, eingesetzt.

Bei derartigen Prüfständen, bei denen im Gegensatz zu Fahrzeugrollenprüfständen die Fahrzeuge nicht auf den Rollen oder Trommeln des Fahrzeugprüfstandes aufstehen, sondern das zu untersuchende Fahrzeug oder Bauteil mit seinen Rädern bzw. seinem Rad auf einem zwei Rollen oder Trommeln umschlingenden Antriebsband aufstehen, ist es zur reproduzierbaren Wiedergabe derdort gefundenen Meßwerte erforderlich, den Bandantrieb im Bereich der Aufstandsfläche des Rades steif auszubilden. Dies geschieht bei der durch die DE-OS 3105163 bekannt gewordenen Lageranordnung für Treibriemen an Reifentestmaschinen durch eine zwischen den Umlenktrommeln angeordnete Lageranordnung, die durch eine mit Bohrungen versehene Platte abgedeckt wird, aus welchen quer zur Förderrichtung des Bandantriebs Flüssigkeit in den Spalt zwischen flexiblem Stahlband und der Platte austritt. Hierdurch wird zum einen die Reibung zwischen Stahlband und zwingend erforderlicher Lageranordnung auf ein Minimum reduziert und zum anderen eine steife Führung des Antriebsbandes im Bereich der Aufstandsfläche des zu untersuchenden Rades bewirkt. Um zu verhindern, daß an dem Stahlband eine Flüssigkeitsschicht verbleibt, die dann als Zwischenschicht zwischen den Umlenkmitteln und Antriebsmitteln, im vorliegenden Falle Umlenktrommel und Antriebstrommel, und dem umzulenkenden Stahlband eine Reibungsverminderung und eine Führungsbeeinträchtigung verursacht, wird am Ende der Lageranordnung, in Förderrichtung gesehen, ein Kunststoffabstreifer vorgesehen.

Um die Lebensdauer der verwendeten Stahlbänder durch die über den Antrieb und die Umlenkung stets erfolgenden Krümmungen nicht über die Maßen zu verkürzen, ist es erforderlich, große Umlenktrommeln für derartige Bandantriebe zu verwenden. Weiterhin besitzen derartige aus solchen Trommeln hergestellte Bandantriebe den Nachteil eines beachtlichen Platzbedarfs und einer großen Masse; dies ist besonders dann nachteilig, wenn über diese Anordnungen Bewegungen in vertikaler Richtung auf die Fahrzeugräder übertragen werden sollen.

Mit der bereits genannten DE-OS 3040355 wird ein Prüfstand zur Ermittlung der Betriebsfestigkeit von Kraftfahrzeugen bzw. Fahrwerksteilen mittels Simulation von Betriebsbeanspruchungen offenbart, bei dem die Räder des zu prüfenden Kraftfahrzeugs bzw. Fahrwerksteils auf einem antreib- und abbremsbaren Abrollelement aufliegen, und bei dem jedem Rad ein separates Abrollelement zugeordnet ist, dessen Lage im Raum unabhängig von der Lage der übrigen Abrollelemente definiert veränderbar ist. Diese Abrollelemente bestehen hierbei aus Gliederbändern, die über eine Tragplatte zwischen gezahnten Umlenkwalzen umlaufen. Eine derartige Anordnung ist zufolge des hohen Verschleißes der hierbei verwendeten Metallteile nicht einsetzbar für Hochgeschwindigkeitsuntersuchungen, bei denen erhebliche Kräfte auftreten.

Ausgehend von der eingangs besprochenen DE-OS 3105163 liegt der Erfindung die Aufgabe zugrunde, auch bei flüssigkeitsbenetzter Antriebsseite eines endlosen Bandantriebs einen Reibungskoeffizienten zwischen Antriebsseite des Bandantriebs und Antrieb zu erhalten, der praktisch gleich ist dem im trockenen Zustand vorhandenen. Diese Aufgabe wird durch das kennzeichnende Merkmal des Verfahrensanspruchs 1 gelöst. Durch Drainage der Antriebs- und Umlenkmittel wird die Bildung eines Flüssigkeitsfilms, beispielsweise zwischen dem Mantel einer Antriebstrommel oder einer Umlenktrommel und der Antriebsseite des Bandantriebs vermieden, da der durch diese Umschlingungsmittel vorgespannte Bandantrieb im Bereich der Drainage den Flüssigkeitsfilm zur Seite dringen kann.

Eine Ausgestaltung des Verfahrens nach Anspruch 1 wird in den kennzeichnenden Merkmalen des Anspruchs 2 angegeben. Durch die Schaltung einer Drainage, deren Schluckmenge mindestens gleich der in der Zeiteinheit aus dem flüssigkeitsbenetzten Bandantrieb anfallenden Flüssigkeitsmenge werden auch bei flüssigkeitsbenetzten Bandantrieben praktisch dieselben Reibungskoeffizienten erreicht, wie sie bei trockenen Bandantrieben zwischen Antrieb und Umlenkung einerseits und Band andererseits vorgegeben sind. Durch die Erfindung können darüber hinaus nunmehr erstmals für derartige Anwendungszwecke neben endlosen Stahlbändern als Antriebsbändern auch endlose Kunststoff- oder Gummibänder als Antriebsbänder verwendet werden, mit dem Vorteil, Antriebs- und Umlenkrollen oder -trommeln mit wesentlich geringerem Durchmesser als für Stahlbänder erforderlich, verwenden zu können. Durch die Verringerung der zu beschleunigenden und abzubremsenden Massen bei Betriebsuntersuchungen und durch die wesentlich kleineren Durchmesser können nunmehr auch derartige Prüfstände für Hochgeschwindigkeitsuntersuchungen an Fahrzeugen, wie sie beispielsweise in der DE-OS 3040355 beschrieben sind, verwendet werden. Insbesondere lassen sich nunmehr auch Untersuchungen an Einzelrädem mit vertikaler Bewegungseinleitung durchführen, ohne daß unverhältnismäßig große Massen bewegt werden müssen.

Ausgehend von einer Vorrichtung zur Führung und zum Antrieb eines auf einer Tragseite von Kräften beaufschlagbaren, auf einer Antriebsseite flüssigkeitsbenetzten über eine Lagerung abgestützten und um Antriebs- und Umlenkmittel geschlungenen Antriebsbandes läßt sich die der Erfindung zugrundeliegende Aufgabe mit den kennzeichnenden Merkmalen des Anspruchs 3 lösen. Durch das erfindungsgemäße Ausrüsten der Rollen und/oder Walzen, die aus Vollmaterial bestehen oder als Trommeln hohl ausgebildet sein können, mit einer Längsprofilierung auf ihren Umfängen, im wesentlichen in Drehrichtung, werden umlaufende Drainagekanäle geschaffen, in die der Flüssigkeitsfilm abgedrängt werden kann. Diese Vorrichtung ist zur Durchführung des Verfahrens gemäß Anspruch 1 und 2 georgnet.

In Anspruch 4 wird eine erfinderische Ausgestaltung unter Schutz gestellt, die sich dadurch auszeichnet, daß das gurtfreie Volumen des Profils mindestens gleich ist dem durchschnittlich zu drainierenden Flüssigkeitsvolumen. Hiermit besteht bei einfachem Aufwand die Möglichkeit, den Flüssigkeitsfilm während des Umlaufs des Antriebsbandes um die Umlenk- oder Antriebsmittel in die Drainagen abzudrängen.

Eine noch weitere Ausgestaltung des Erfindungsgegenstandes wird mit Anspruch 5 unter Schutz gestellt.

Durch Ausgestaltung der Profilstege am Stegmantel mit einer die Flüssigkeit verdrängenden Kontur, die gleichzeitig so ausgebildet ist, daß die resultierende Kantenpressung kleiner als die Scherfestigkeit des für den Bandantrieb gewählten Materials ist, wird die Lebensdauer der aus den verschiedensten Materialien wie Stahl, Nichteisenmetallen, Gummi oder Kunststoffen hergestellten Bänder für derartige Bandantriebe nicht beeinträchtigt. Als besondersvorteilhafte Konturen für die Stegmäntel haben sich ballige Ausgestaltungen mit Abrundungen zu den Flanken der Stege oder dachschrägenartige mit abgerundetem First als besonders vorteilhaft herausgestellt.

Durch die in Anspruch 6 unter Schutz gestellte Maßnahme, die Flanken der Profilstege zu durchbohren, wird bei Auftreten eines großen Flüssigkeitsstroms, der innerhalb der Drainagekanäle nicht aufgenommen werden kann, die Möglichkeit geschaffen, Flüssigkeit nach außen abzuleiten.

In noch weiterer Ausgestaltung des Erfindungsgegenstandes wird in Anspruch 7 unter Schutz gestellt, den Traganteil der Stegflächen der Verteilung der Bandspannung über der Rollenbreite anzupassen. Damit wird eine noch weitere Schonung des verwendeten Bandmaterials bewirkt Auch können, wie in Anspruch 8 unter Schutz gestellt, die Profilvertiefungen asymmetrisch über die Breite der Antriebs und Umlenkmittel verteilt sein.

Zur Vermeidung von evtl. auftretenden Einlaufspuren auf der Antriebsseite des Bandantriebs wird gemäß Anspruch 9 der vorliegenden Erfindung vorgeschlagen, die Profilvertiefungen in Drehrichtung sinusähnlich zu gestalten.

Zur Vermeidung von Dauerbrüchen, die von den Profilvertiefungen ausgehen können und zum Ausfall derartiger Bandantriebe bei Prüfmaschinen führen können, wird gemäß Anspruch 10 vorgeschlagen, den jeweiligen Profilgrund abgerundet auszubilden.

In noch weiterer Ausgestaltung des Erfindungsgegenstandes, insbesondere in Ausgestaltung des Anspruchs 5, wird in Anspruch 11 unter Schutz gestellt, die Antriebs- und Umlenkmittel im Profilgrund mit radialen Bohrungen zu versehen und im Inneren der Umlenk- und Antriebsmittel, wenn diese hohl ausgeführt sind, stationäre Abstreifeinrichtungen und mit diesen verbundene Flüssigkeitsableitervorzusehen. Damit kann bei Auftreten eines erhöhten Flüssigkeitsvolumens das überschüssige Flüssigkeitsvolumen nach innen ausweichen und auch gezielt abgeleitet werden. Insbesondere dann, wenn erfindungsgemäß die Ableitungen mit Unterdruck beaufschlagbar sind.

Die der Erfindung zugrundeliegende Aufgabe läßt sich auch ausgehend von dem bekanntgewordenen Stand der Technik durch die kennzeichnenden Merkmale des Anspruchs 12 lösen. Mit dieser Vorrichtung läßt sich das Verfahren auch den Ansprüchen 1 und 2 auch durchführen. Durch den erfindungsgemäßen Einsatz von glatten Antriebs- oder Umlenktrommeln, die an ihrem Mantel Durchgangsbohrungen in radialer Richtung aufweisen und durch im Inneren der Trommeln vorgesehene, über die Breite der Trommeln verlaufende, nahe deren Innenwand stationär angeordnete Flüssigkeitsabstreifvorrichtungen und hieran angeschlossene Ableitvorrichtungen wird die auf der Antriebsseite des Bandes vorhandene Flüssigkeitsschicht beim Auflaufen der Antriebsseite auf die Umlenk- oder Antriebsrolle in diese Bohrungen abgedrängt, so daß ein günstiger Reibungskoeffizient zwischen trockenem und benetztem Antriebsband einerseits und den Antriebsmitteln und Umlenkmitteln andererseits erhalten bleibt. Darüber hinaus müssen bei einem derartigen erfindungsgemäßen Antriebssystem keine zusätzlichen Maßnahmen im Hinblick auf Verdrängung der Flüssigkeitsschicht und im Hinblick auf die Scherfestigkeit durchgeführt werden.

Der in Anspruch 13 unter Schutz gestellte Einsatz von Unterdruck stellt eine erfinderische Erweiterung des Erfindungsgegenstandes dar.

Durch die in Anspruch 14 unter Schutz gestellte Maßnahme, das Bohrungsvolumen über eine Breite der Trommel im wesentlichen gleich, jedoch größer als das ankommende Flüssigkeitsvolumen auszugestalten, wird ein Transport der Flüssigkeit durch die Bohrungen ins Innere gefördert Befinden sich in noch weiterer Ausgestaltung des Erfindungsgegenstandes die Bohrungen der darauffolgenden Reihe in Drehrichtung nicht auf demselben Umfangskreis, sondern versetzt hierzu, insbesondere zwischen zwei Bohrungen der vorhergehenden Reihe, so kann sich zwischen den Bohrungen auch bei höherer Umfangsgeschwindigkeit kein Flüssigkeitskeil ausbilden, der zu einer Verringerung des Reibungskoeffizienten führt.

Werden, wie in Anspruch 15 unter Schutz gestellt, die Bohrungen von der Außenseite des Mantels her mit Ansenkungen versehen, und bilden die Ränder dieser Ansenkungen stegartige Erhöhungen, so bildet sich ein Netz schmaler Stege, die zum einen zwangsläufig zufolge der Vorspannung des Bandantriebs eine evtl. verbleibende Flüssigkeitsschicht verdrängen, ohne daß Rücksicht auf die Scherfestigkeit des Materials genommen werden muß, da die Trommelmantel netzartig die Antriebsseite des Bandes abstützen, wobei die Netz- öffnungen selbst Vertiefungen und Durchbohrungen besitzen, durch die Flüssigkeit in das Innere der Hohltrommel geleitet wird.

Die in Anspruch 16 unter Schutz gestellte zylindrische Ansenkung der Bohrungen stellt eine besondere Ausgestaltung derartiger Ansenkungen unter Schutz. Anstelle einer derartigen zylindrischen Ansenkung kann die größte Fläche der Ansenkung auch quadratisch, rautenförmig oder sechseckig sein, so daß ein entsprechendes Netz schmaler gleiche Tragflächen bildender Stege den Mantel der Antriebs- und Umlenkrollen bildet.

Auf alle bisher für derartige Bandantriebe verwendeten Rollen, Walzen oder Trommeln, unabhängig, ob ihr Mantel glatt oder ballig ausgebildet ist, läßt sich die vorliegende Erfindung anwenden.

Werden Gummi oder Kunststoffbänder für derartige Bandantriebe verwendet, so entfallen bei den Lagerungen der Bander zwischen den Antriebs- und Umlenkrollen nunmehr die für einen Notlauf erforderlichen Kunststoffbeschichtungen der Platten und es entfallen insgesamt Seitenführungen durch Rollen oder Stützplatten.

Im Nachfolgenden wird die Erfindung anhand der Zeichnung näher erläutert.

Es zeigen in schematischer Darstellung :
Fig. 1 einen Bandantrieb mit Profilen als Drainagekanäle am Umfang in Drehrichtung und radialen Drainagekanälen bei einer glatten Trommel
Fig. 2 ein Antriebs- oder Umlenkelement mit Zylindermantel oder ballig ausgebildetem Mantel und am Umfang in Drehrichtung angeordneten Profilen
Fig. 3a-e teils im Schnitt, teils in Draufsicht verschiedene Profilanordnungen und
Fig. 4a-e teils im Schnitt, teils in Draufsicht, verschiedene Ansenkungen auf einem glatten Trommelmantel. In den einzelnen Figuren werden gleiche Bauteile mit denselben Bezugsziffem bezeichnet.

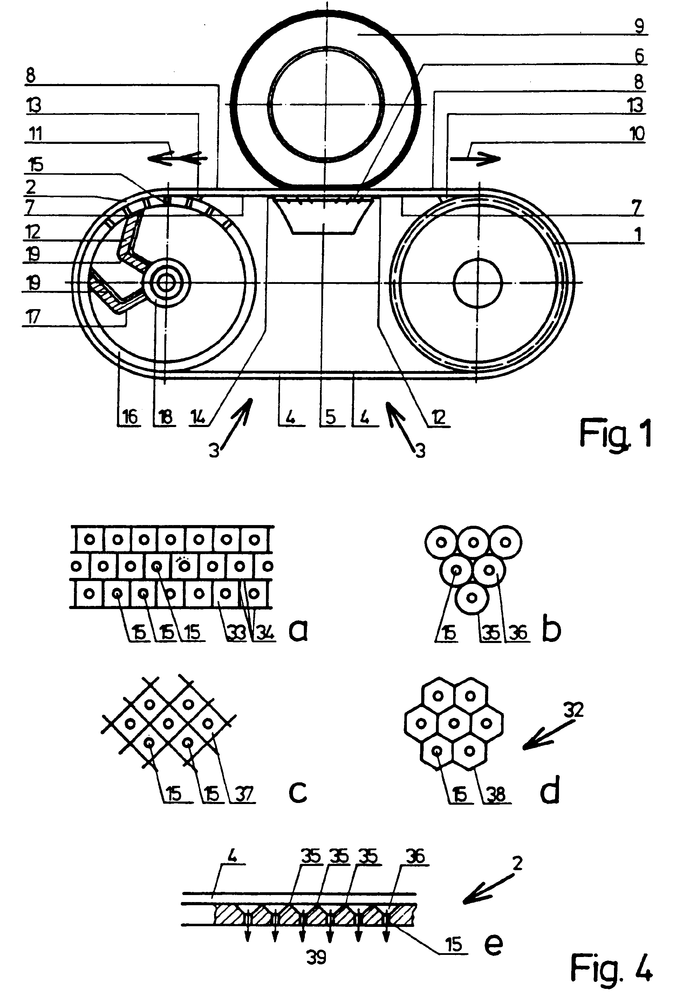

Zur Erläuterung des Erfindungsgegenstandes sind in Fig. 1 ein Profilumlenk- oder Antriebsmittel 1 und eine durchbohrte glatte Trommel 2, die ebenfalls als UmlenkoderAntriebsmittel für einen Bandantrieb 3 dienen kann, dargestellt. Der jeweilige Bandantrieb 3 wird von einem Antriebsband 4 umschlungen und besitzt zwischen dem Umlenk- und Antriebsmittel eine Lagerung 5 zur Unterstützung des Antriebsbands 4 mittels aus der Lagerung 5 austretenden Flüssigkeitsstroms 6, der zwischen Antriebsband 4 steif gegen ein auf der Tragseite 8 des Antriebsbands aufstehendes Fahrzeugrad 9 abstützt.

Der Einfachheit halber wird angenommen, daß sich das Antriebsband 4 im Falle der Beschreibung des Profilumlenk- oder Antriebsmittels 1 im Uhrzeigersinn gemäß Pfeil 10 bewegt und im Falle der Beschreibung der durchbohrten glatten Trommel 2 das Antriebsband 4 entgegengesetzt dem Uhrzeigersinn in Richtung des Doppelpfeils 11 bewegt.

Insoweit ist die Fig. 1 jeweils für den Fall des Profilumlenk- oder Antriebsmittels 1 linksseitig mit derselben Trommel 1 zu versehen, während im Falle der Beschreibung der durchbohrten glatten Trommel Fig. 1 rechtsseitig ebenfalls eine gleichartige durchbohrte glatte Trommel zu ergänzen ist, so daß dann ein kompletter Bandantrieb einmal aus einem Profilantriebsmittel 1 und einem Profilumlenkmittel 1 besteht und im anderen Falle um eine durchbohrte Trommel 2 als Antrieb und eine durchbohrte Trommel 2 als Umlenkung.

Wird der Bandantrieb 3 so angetrieben, daß er in Pfeilrichtung 10 umläuft, wobei dies durch ein Profilantriebsmittel 1 oder auch durch das Fahrzeugrad geschehen kann, und zwar im beschleunigenden oder bremsenden Sinne, so daß Kräfte in Förderrichtung auf die Tragseite 8 des Antriebsbandes 4 einwirken, so tritt aus einem Spalt 12 zumindest ein Teil des Flüssigkeitsstroms in Richtung des Pfeils 10 aus und benetzt die Antriebsfläche 7 des Antriebsbands 4 bis zum Auflaufen des Antriebsbands 4 auf das Profilumlenk- oderAntriebsmittel 1; dabei können diese Antriebs- und Umlenkmittel aus Trommeln, Hohlwalzen, Walzen aus Vollmaterial oder Rollen bestehen.

In Abhängigkeit von der Geschwindigkeit des Antriebsbands wird der Flüssigkeitsstrom 6 als Flüssigkeitskeil 13 zwischen den Außenmantel des Profilumlenkmittels, das Profilantriebsmittel und das Antriebsband 4 gezogen und vermindert damit den Reibungskoeffizienten zwischen der Antriebsfläche 7 des Antriebsbands 4 und dem Mantel des Profilumlenk- oder Antriebsmittels 1. Bei entsprechend hoher Geschwindigkeit ist der Reibungskoeffizient zwischen beiden so klein geworden, daß keine Antriebskräfte zur Beschleunigung oder zur Verzögerung zwischen Rolle 1 und Antriebsfläche 7 übertragen werden können. Gleichzeitig können auch keine Querkräfte, die über das Fahrzeugrad 9 in die Tragseite 8 des Förderbands 4 eingeleitet wurden, von der Rolle 1 über die Antriebsfläche 7 abgestützt werden.

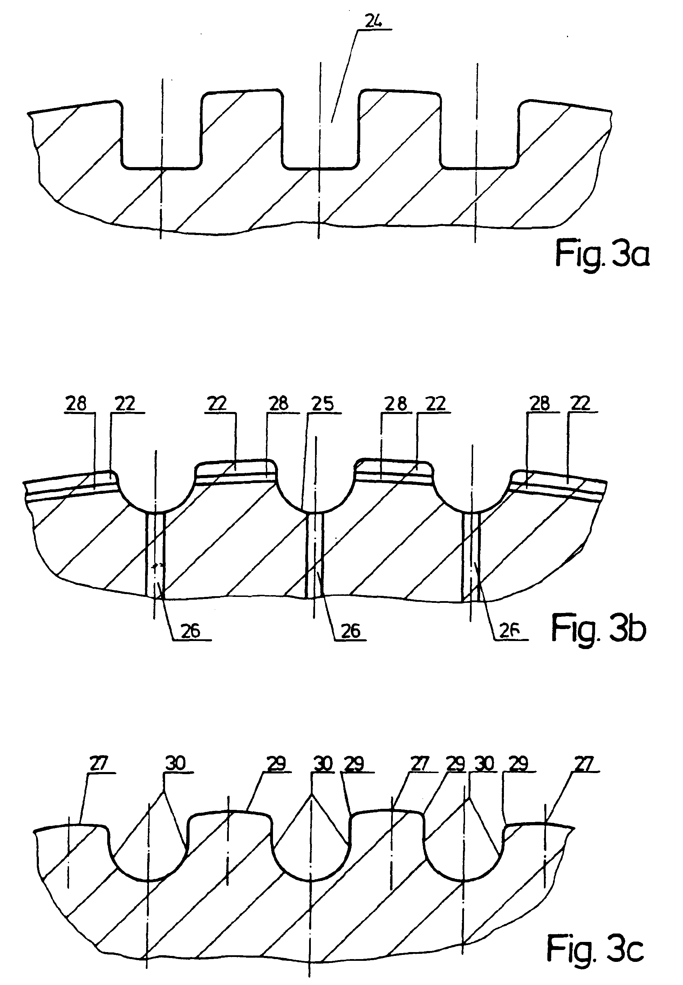

Durch die Anordnung von Profilen, wie sie in den Fig. 3a bis 3e näher erläutert werden, wird die Wirkung des Flüssigkeitskeils 13 auch bei hoher Geschwindigkeit unterdrückt.

Im Falle der durchbohrten glatten Trommel 2 tritt bei der angenommenen Bewegung des Antriebsbands 4 entsprechend dem Doppelpfeil 11 aus dem anderen Spalt 14 ebenfalls zumindest ein Teil des Flüssigkeitsstroms 6 aus und bildet ebenso einen Flüssigkeitskeil 13 im Bereich des Eintretens des Antriebsbands 4 in den Umfang der durchbohrten glatten Trommel 2. Zufolge Radialbohrungen 15, die im Trommelmantel 16 der durchbohrten glatten Trommel 2 angeordnet sind, wird der Flüssigkeitskeil 13 in das Innere der durchbohrten glatten Trommel 2 eingebracht und dort über Abstreifeinrichtungen 17 einer stationären Ableiteinrichtung 18 zugeführt Die Flüssigkeitsabführung kann noch durch an Unterdruck anschließbare Kanäle 19 unterstützt werden. Die derart abgesaugte Flüssigkeitsmenge kann über die Lagerung der glatten Trommel abgeleitetwerden, wenn die Zapfen der Trommel 2 als Hohlwellen ausgeführt sind.

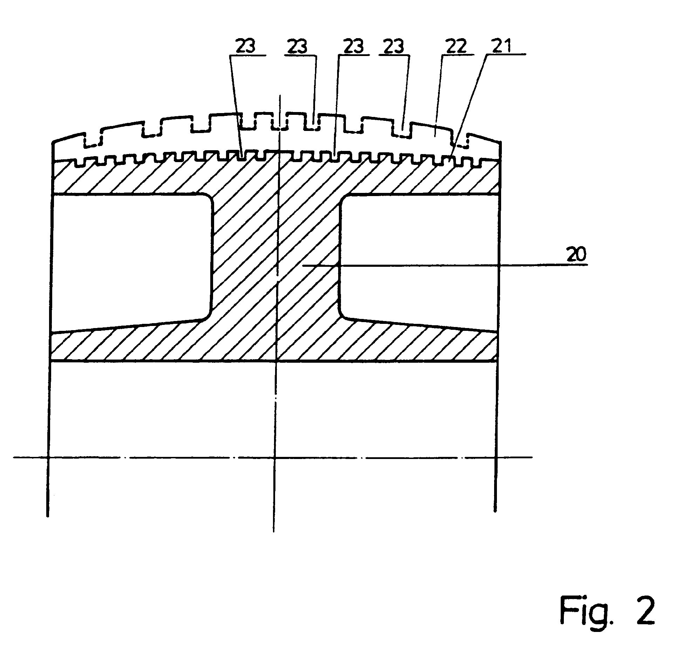

In Fig. 2 ist ein Schnitt durch eine Antriebs- oder Umlenkrolle 20 geführt, dessen Mantel eine zylindrische Form 21 oder eine ballige Form 22 aufweist und in dem Profile 23 angeordnet sind, die in Drehrichtung umlaufen. Fig. 3a zeigt ein Drainageprofil mit annähernd rechteckigem Rillenquerschnitt 24, Fig. 3b ein Drainageprofil mit gerundetem Rillengrund 25. In Fig. 3b ist auch schematisch dargestellt, daß im gerundeten Rillengrund 25 Radialbohrungen 26 an die Innenwand einer nicht näher dargestellten Trommel geführt sind, an der dort, wie zu Fig. 1 beschrieben, Flüssigkeit austreten und in entsprechender Form abgeführt werden kann. Gleichzeitig sind in Fig. 3b Stege 22 zwischen den Rillen mit gerundetem Rillengrund 25 vorgesehen, die durch Bohrungen 28, die im wesentlichen in axialer Richtung verlaufen, miteinander verbunden sind und die bei einem Überschuß an abzutransportierendem Flüssigkeitsvolumen überschüssige Flüssigkeit aus dem Bereich des Profils mit gerundetem Rillengrund abführen.

In Fig. 3c ist die Mantelfläche der Stege 27 ballig ausgeführt und gleichzeitig sind Rundungen 29 zu den Flanken 30 der Stege 27 angeordnet, so daß zum einen ein Verdrängen des Flüssigkeitsvolumens von der Antriebsseite 7 des Antriebsbands 4 bewirkt wird und gleichzeitig durch die Rundungen 29 die Scherkraft, die auf die Bander einwirkt, reduziert wird.

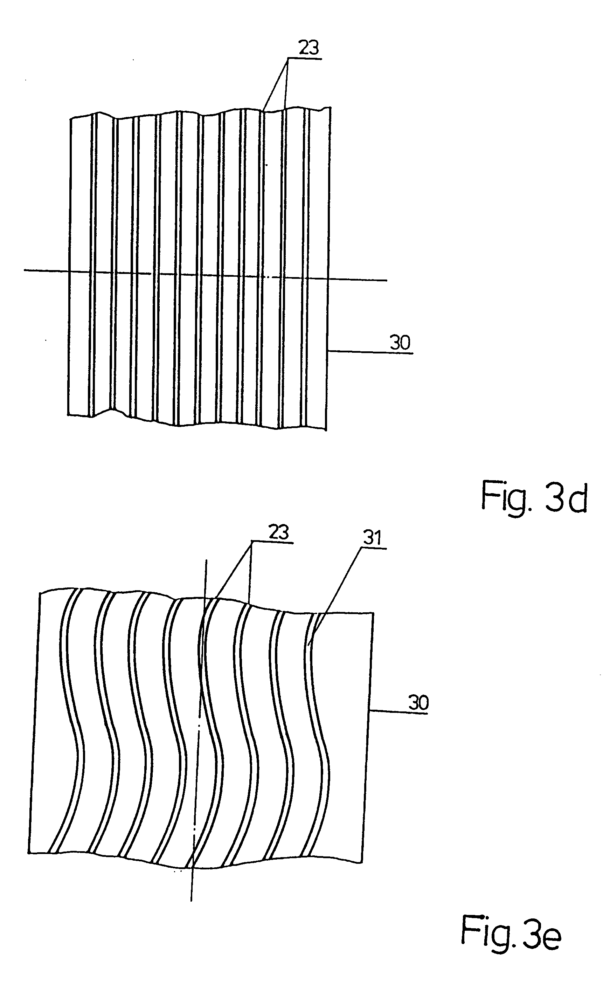

In Fig. 3d ist ein Umfangsteil 30 eines Profilumlenkoder Antriebsmittels 1 dargestellt, bei dem die Profile 23 am Mantel in Drehrichtung verlaufen. Fig. 3e zeigt am Umfangsteil 30 einen etwa sinusförmigen Verlauf 31 der Profile 23 am Umfang des Antriebs- oder Umlenkmittels 1.

Fig. 4a bis d stellt einen Ausschnitt 32 aus der Oberfläche einer durchbohrten glatten Trommel dar, während Fig. 4e einen Teilschnitt über die Breite der durchbohrten glatten Trommel 2 darstellt. In Fig. 4a sind die Radialbohrungen 15 von quadratischen Ansenkungen 33 umgeben. Die Ansenkungen 33 bilden ein quadratisches Stegmuster, welches den Mantel der durchbohrten glatten Trommel 2 überzieht In Fig. 4a ist dargestellt, daß die Reihen der Radialbohrungen 15 entweder hintereinander oder gegeneinander versetzt hintereinander angeordnet sein können.

Fig. 4b zeigt ein rundes Stegmuster 35. In diesem Fall werden die Radialbohrungen 15 von Kreisansenkungen 36 umgeben.

Fig. 4c stellt ein Rautenstegmuster 37 dar, mit dem die Manteloberfläche der durchbohrten glatten Trommel 2 überzogen ist, während in Fig. 4d ein sechseckiges Stegmuster 38 die Oberfläche der glatten durchbohrten Rolle 2 überzieht.

Gemäß Fig. 4e umschließt das Antriebsband 4 die glatte durchbohrte Trommel 2. Hierdurch kann das am Antriebsband 4 anhaftende Flüssigkeitsvolumen beispielsweise über die Kreisansenkungen 36, die jeweils durch das Stegmuster 35 voneinander getrennt sind, durch die Radialbohrungen 15 in das Innere 39 der glatten durchbohrten Trommel 2 gelangen, wo es dann überAbstreifeinrichtungen 17, wie in der Fig. 1 näher erläutert, und über Ableiteinrichtungen 18 aus der Trommel 2 entfernt werden kann.

Durch entsprechende Auswahl der Stegmuster kann für jedes als Antriebsband zu verwendende Material die Stegform ausgewählt werden, mit der eindeutig auch bei mit einem Flüssigkeitsfilm belegte Antriebsband 4 die Kraftübertragung zwischen Antrieb und Antriebsband sowohl für längs- als auch für Querkräfte gewährleistet ist.

## Patentansprüche

1. Verfahren zur Führung und zum Antrieb eines auf seiner Tragseite (8) von Kräften beaufschlagbaren und auf seiner Antriebsseite (7) durch einen aus einer Lagerung (5) austretenden Flüssigkeitsstrom (6) ---.

2. Verfahren nach Anspruch 1, dadurch gekennzeichnet, daß die drainierbaren umschlungenen Antriebs-und Umlenkmittel mit ihrer Drainage eine Schluckmenge besitzen, die mindestens gleich ist der in derZeiteinheit anfallenden Flüssigkeitsmenge aus dem flüssigkeitsbenetzten Bandantrieb.

3. Vorrichtung mit einem auf seiner Tragseite (8) von Kräften beaufschlagbaren und auf seiner Antriebsseite (7) durch einen aus einer Lagerung (5) austretenden Flüssigkeitsstrom (6) flüssigkeitsbenetzten über das Lager (5) abgestützten und um Antriebsmittel (1) und Umlenkmittel (2) geschlungenen Antriebsband (4),

4. Vorrichtung nach Anspruch 3, dadurch gekennzeichnet, daß das gurtfreie Volumen des Profils (19) mindestens gleich dem durchschnittlich zu drainierenden Flüssigkeitsvolumen ist.

5. Vorrichtung nach Anspruch 3 und Anspruch 4, dadurch gekennzeichnet, daß in axialer Erstreckung der Antriebs- oder Umlenkrolle (20) ein an eine jeweils umlaufende Profilvertriefung (23) anschließender Profilsteg (27) an seinem mit dem Bandantrieb (3) zusammenwirkenden Umfang eine die Flüssigkeit verdrängende Kontur (27) besitzt und daß die durch die Kontur bewirkte resultierende Kantenpressung kleiner als die Scherfestigkeit des für den Bandantrieb (3) verwendeten Materials ist.

6. Vorrichtung nach Anspruch 5, dadurch gekennzeichnet, daß die Flanken der Stege (27) axial (28) durchbohrt sind.

7. Vorrichtung nach Anspruch 6, dadurch gekennzeichnet, daß die jeweils tragende Stegfläche (27) entsprechend der jeweils an dieser Stelle wirkenden unterschiedlichen Spannung des Bandantriebs (3) ausgebildet ist.

8. Vorrichtung nach einem der vorhergehenden Ansprüche, dadurch gekennzeichnet, daß die Profilvertiefungen asymmetrisch über die Breite der Umlenk- oder Antriebsmittel verteilt sind.

9. Vorrichtung nach einem der vorhergehenden Ansprüche, dadurch gekennzeichnet, daß die Profilvertiefungen in Drehrichtung der Profilumlenk- oder Antriebsmittel (1) einen sinusähnlichen Verlauf (31) aufweisen.

10. Vorrichtung nach einem dervorhergehenden Ansprüche, dadurch gekennzeichnet, daß der jeweilige Profilgrund (25) abgerundet ist.

11. Vorrichtung nach einem der vorhergehenden Ansprüche, dadurch gekennzeichnet, daß die Profilumlenkoder Antriebsmittel (1) im Profilgrund (25) eines jeden Profils, am Umfang verteilt, mehrere Radialbohrungen (26) besitzen und daß im Inneren der Profilumlenk- oder Antriebsmittel (1) stationär angeordnete Abstreifeinrichtungen und mit diesen verbundene Flüssigkeitsableiter vorhanden sind.

12. Vorrichtung mit einem auf seiner Tragseite (8) von Kräften beaufschlagbaren und auf seiner Antriebsseite (7) durch einen aus einer Lagerung (5) austretenden Flüssigkeitsstrom (6) flüssigkeitsbenetzten über das Lager (5) abgestützten und um Antriebsmittel (1) und Umlenkmittel (2) geschlungenen Antriebsband (4),

13. Vorrichtung nach einem der Ansprüche 11 oder 12, dadurch gekennzeichnet, daß die stationären Ableiteinrichtungen (18) mit einer Unterdruck erzeugenden Einheit (19) verbunden sind.

14. Vorrichtung nach Anspruch 13, dadurch gekennzeichnet, daß das Bohrungsvolumen einer Reihe sich über die Breite der durchbohrten glatten Trommel (2) erstreckender Bohrungen (15) mindestens gleich dem Volumen des in diesem Bereich auftretenden Flüssigkeitsfilms ist.

15. Vorrichtung nach Anspruch 14, dadurch gekennzeichnet, daß jede Bohrung (15) mit einer Ansenkung (33, 36) versehen ist, daß die Ränder (34, 35, 37. 38) der Ansenkungen am Außenmantel der durchbohrten glatten Trommel (2) ein Netz stegartiger Erhöhungen bilden und daß das Fassungsvolumen einer Reihe Bohrungen (15) mit Ansenkungen (33, 36) über die Breite der durchbohrten glatten Trommel (2) mindestens gleich dem Volumen des in diesem Bereich auftretenden Flüssigkeitsfilms ist.

16. Vorrichtung nach Anspruch 15, dadurch gekennzeichnet, daß zylindrische Ansenkungen (36) an die Bohrungen (15) anschließen.

## Claims

1. A method of guiding and driving a belt drive (4) which is acted upon by forces on its carrying side (8) and is supported and wetted with liquid on its drive side (7), by a liquid flow (6) which emerges from a bearing (5), and is looped around drive means (1) and guide means (2), characterised in that the encircled drive and guide means (1 and 2 respectively) are drained.

2. A method according to claim 1, characterised in that the drainable encircled drive and guide means with their drainage have a take-up quantity which is at least equal to the quantity of liquid obtained in the time unit from the liquid-wetted belt drive.

3. A device for guiding and driving a drive belt (4) which is acted upon by forces on its carrying side (8) and is wetted with liquid on its drive side (7), by a liquid flow (6) which emerges from a bearing (5), supported by the bearing (5) and looped around drive means (1) and guide means (2), for carrying out the method according to claims 1 and 2, characterised in that the guide or drive means (1 and 2 respectively) carry a longitudinal profiling (19) on their peripheries substantially in the direction of rotation.

4. A device according to claim 3, characterised in that the belt-free volume of the profile (19) is at least equal to the volume of liquid to be drained on average.

5. A device according to claim 3 and claim 4, characterised in that axially of the drive or guide roller (20) a profiled web (27), which follows on in each case from a circumferential profiled depression (23), has at its periphery cooperating with the belt drive (3) a contour (27) which displaces the liquid and that the resulting edge pressure caused by the contour is smaller than the shear strength of the material used for the belt drive (3).

6. A device according to claim 5, characterised in that the flanks of the webs (27) are bored through axially (28).

7. A device according to claim 6, characterised in that the respective carrying web surface (27) is formed in accordance with the respective different tension of the belt drive (3) acting at this point.

8. A device according to any one of the preceding claims, characterised in that the profiled depressions are divided up asymmetrically over the width of the guide or drive means.

9. A device according to any one of the preceding claims characterised in that the profiled depressions have a similar to sinusoidal path (31) in the direction of rotation of the profiled guide or drive means (1).

10. A device according to any one of the preceding claims, characterised in that the respective profiled base (25) is rounded off.

11. A device according to any one of the preceding claims, characterised in that the profiled guide or drive means (1) have several radial bores (26) distributed on the periphery in the profiled base (25) of each profile and that there are inside the profiled guide or drive means (1) stationary wiper devices and liquid ducts connected thereto.

12. A device for guiding and driving a drive belt (4) which is acted upon by forces on its carrying side (8), is wetted with liquid on its drive side (7) by a liquid flow (6) which emerges from a bearing (5), supported by the bearing (5) and is looped around drive means (1) and guide means (2), for carrying out the method according to claims 1 and 2, characterised in that smooth drums (2) or hollow rolls have through bores (15) in a radial direction on their outer surfaces, that inside the bored smooth drums (2) there are provided stationary wiper devices (17) cooperating with the inner wall of the drums (2) and that stationary duct devices (18) are provided for the liquid.

13. A device according to any one of claims 11 or 12, characterised in that the stationary duct devices (18) are connected to a unit (19) producing underpressure.

14. A device according to claim 13, characterised in that the volume of the bores of a row of bores (15) which extend over the width of the bored smooth drum (2) is at least equal to the volume of the film of liquid arising in this region.

15. A device according to claim 14, characterised in that each bore (15) is provided with a countersink (33, 36), that the rims (34, 35, 37, 38) of the countersinking form a network of web-like elevations on the outer surface of the bored smooth drum (2) and that the volumetric capacity of a row of bores (15) with countersinking (33, 36) over the width of the bored smooth drum (2) is at least equal to the volume of the film of liquid arising in this region.

16. A device according to claim 15, characterised in that cylindrical countersinking (36) follows on from the bores (15).

## Revendications

1. Procédé de guidage et d'entraînement d'une bande d'entraînement (4) pouvant être soumise à des forces sur son côté porteur (8) et soutenue sur son côté d'entraînement (7) mouillé par un courant de liquide (6) sortant d'un support (5) et enroulée autour de moyens d'entraînement (1) et de moyens de contournement (2) caractérisé en ce que les moyens d'entraînement et de contournement (1 et 2) sont drainés.

2. Procédé selon la revendication 1, caractérisé en ce que les moyens d'entraînement et de contournement entourés et pouvant être drainés bénéficient, par leur drainage, d'une capacité d'aspiration, qui est au moins égale a la quantité de liquide sortant par unité de temps de l'entraînement a bande, mouillé par le liquide.

3. Dispositif comportant une bande d'entraînement (4) pouvant être soumise à des forces sur son côté porteur (8) et soutenue par un appui (5) sur son côté d'entraînement (7) mouillé par un courant de liquide (6) sortant d'un support (5) et enroulée autour de moyens d'entraînement (1) et de moyens de contournement (2) pour mettre en oeuvre le procédé selon les revendications 1 et 2 caractérisé en ce que les moyens d'entraînement ou de contournement entourés (1 ou 2) portent sur leur périphérie un profilage longitudinal (19) orienté sensiblement dans le sens de rotation.

4. Dispositif selon la revendication 3, caractérisé en ce que le volume exempt de courroie du profil (19) est au moins égale au volume moyen de liquide à drainer.

5. Dispositif selon la revendication 3 et 4, caractérisé en ce que, dans l'étendue axiale du rouleau d'entraînement ou de contournement (20), une nervure profilée (27) se raccordant a chaque cavité profilée périphérique (23), comporte sur sa périphérie coopérant avec l'entraînement de bande (3) un contour (27) qui refoule le liquide et que la pression résultante sur les bords qui est provoquée par le contour est inférieure à la résistance au cisaillement du matériau utilisé pour l'entraînement de bande (3).

6. Dispositif selon la revendication 5, caractérisé en se que les flancs des nervures (27) sont traversées par des perçages axiaux (28).

7. Dispositif selon la revendication 6, caractérisé en ce que chaque surface d'âme porteuse (27) est réalisée en fonction de la tension variable de l'entraînement de bande (3) qui agit à cet endroit.

8. Dispositif selon l'une des revendications précédentes, caractérisé en ce que les cavités profilées sont distribuées de façon asymétrique sur la largeur des moyens de contournement ou d'entraînement.

9. Dispositif selon l'une des revendications précédentes, caracterisé en ce que les cavités profilées présentent dans le sens de rotation des moyens de contournement ou d'entraînement (1) une allure sinusoïdale (31).

10. Dispositif selon l'une des revendications précédentes, caractérisé en ce que chaque fond de profil (25) est arrondi.

11. Dispositif selon l'une des revendications précédentes, caractérisé en ce que les moyens de contournement ou d'entraînement profilés (1), situés dans le fond (25) de chaque profil, en étant répartis à la périphérie, comportent plusieurs perçages radiaux (26) et que des dispositifs de raclage sont disposés stationnaires à l'intérieur des moyens de contournement ou d'entraînement (1) et comportent des déflecteurs de liquide reliés à ceux-ci.

12. Dispositif comportant une bande d'entraînement (4) pouvant être soumise à des forces sur le côté porteur (8) et soutenue par un appui (5) sur le côté d'entraînement (7) mouillé par un courant de liquide sortant d'un support (5) et enroulée autour de moyens d'entraînement (1) et de moyens de contournement (2) pour mettre en oeuvre le procédé selon les revendications 1 et 2 caractérisé en ce que des tambours lisses (2) ou des rouleaux creux présentent sur leurs enveloppes des perçages traversant (15) orientés en direction radiale, des dispositifs de raclage (17) étant prévus, disposés stationnaires à l'intérieur des tambours lisses percés (2) et qui coopèrent avec la paroi intérieure des tambours (2) et des dispositifs déflecteurs stationnaires (18) étant prévus pour le liquide.

13. Dispositif selon l'une des revendications 11 ou 12, caractérisé en ce que les dispositifs déflecteurs stationnaires (18) sont reliés à une unité (19) produisant un vide.

14. Dispositif selon la revendication 13, caractérisé en ce que les volumes de perçage d'une série de perçages (15) s'étendant sur la largeur des tambours lisses percés (2) est au moins égal au volume du film de liquide se manifestant dans cette zone.

15. Dispositif selon la revendication 14, caractérisé en ce que chaque perçage (15) est pourvu d'un chanfrein (33,36), les bords (34,35,37,38) des chanfreins, sur l'enveloppe extérieure du tambour lisse percé (2) formant un réseau d'élévations nervurées et que le volume de contenant d'une série de perçages (15) avec des chanfreins (33,36), sur la largeur du tambour lisse percé (2) est au moins égal au volume du film de liquide apparaissant dans cette zone.

16. Dispositif selon la revendication 15, caractérisé en ce que des chanfreins cylindriques (36) se raccordent aux perçages (15).
